# FASCICULE DE BREVET EUROPEEN

(11) **EP 0 401 072 B1**
(45) Date de publication et mention de la délivrance du brevet: **22.09.1993**
(21) Numéro de dépôt: 90401276.2
(22) Date de dépôt: 15.05.1990
(51) Int. Cl.: B65D 47/02

(54) **Ensemble de valve pour emballage de fluide sous pression et emballage équipé d'un tel ensemble**
Ventilzusammenbau für eine unter Druck stehende Verpackung und mit einem derartigen Zusammenbau ausgerüstete Verpackung
Valve assembly for a packing under fluid pressure and packing provided with such an assembly

(30) Priorité: 29.05.1989 FR 8906983; 20.12.1989 FR 8916870
(43) Date de publication de la demande: 05.12.1990
(73) Titulaire: L'AIR LIQUIDE, SOCIETE ANONYME POUR L'ETUDE ET L'EXPLOITATION DES PROCEDES GEORGES CLAUDE, 75321 Paris Cédex 07 (FR); ALFAX AB, 212 24 Malmo (SE)
(72) Inventeur: Politi, Jean-Marie, F-77340 Pontault Combault (FR); Franz, Lennard, S-212 33 Malmo (SE)
(74) Mandataire: Le Moenner, Gabriel

(56) Documents cités:
- EP-A- 0 008 662
- DE-B- 1 750 574
- DE-B- 2 533 537
- DE-C- 299 280
- FR-A- 1 106 037
- US-A- 2 019 251

## Description

La présente invention concerne un ensemble de valve pour emballage perdu ou conteneur non rechargeable, du genre comprenant un boîtier de valve renfermant un clapet principal sollicité en fermeture par un premier ressort de rappel, et susceptible de coopérer avec un moyen d'actionnement du clapet contre l'action du ressort.

L'utilisation de plus en plus fréquente d'emballages légers, qui ne doivent être remplis qu'une seule fois, dits emballages perdus, pose des problèmes de sécurité en ce qui concerne leur réemploi éventuel, qui est interdit, d'autant plus que, dans certains cas, les pressions de service peuvent en être élevées.

Pour éliminer la possibilité d'un quelconque remplissage ultérieur par un utilisateur ignorant la législation, ou les dangers d'une telle opération, l'invention propose un nouvel ensemble de valve, de structure simple et compacte, de faibles coûts de fabrication, permettant exclusivement le remplissage initial de l'emballage et interdisant à coup sûr tout nouveau remplissage subséquent à un vidage, au moins partiel, de l'emballage.

Cet objectif de l'invention est réalisé en aménageant, dans le boîtier, un clapet auxiliaire en série avec le clapet principal et sollicité en fermeture par un second ressort à faible tarage et maintenu initialement en position d'ouverture par un moyen de verrouillage armé initialement en position verrouillée et déplaçable vers une position de déverrouillage définitif par le clapet principal lors d'une action d'ouverture accentuée exercée sur le clapet principal au-delà de sa course d'ouverture normale.

Grâce à cet agencement, après avoir procédé, à la station d'usine, au remplissage classique en liquide et/ou en gaz d'un emballage, il suffit d'exercer sur le clapet principal une action de déplacement plus accentuée pour assurer le déverrouillage du clapet auxiliaire et sa venue en position de fermeture sous l'action du second ressort. On comprend qu'un soutirage ultérieur est tout à fait possible, car le clapet auxilaire s'ouvre sous l'action de la dépression initiale de soutirage grâce à l'action de la pression interne dans l'emballage, mais restera au contraire en position fermée lors d'une tentative de remplissage sous l'effet du second ressort renforcé par la pression externe lors d'une telle tentative de re-remplissage.

Selon une caractéristique plus particulière de l'invention, les clapets principal et auxiliaire sont montés coaxialement avec le moyen de verrouillage qui est constitué d'une pièce à pattes élastiques coopérant un engagement entre le clapet auxiliaire et le boîtier de valve.

D'autres caractéristiques et avantages de l'invention ressortiront de la description qui suit de modes de réalisation donnés à titre d'exemple, faite en référence aux dessins annexés, dans lesquels :
- les figures 1 à 3 sont des vues en coupe d'un premier mode de réalisation d'un ensemble de valve, dans les positions successives : figure 1 prête à la charge ; figure 2, en cours de la charge ; figure 3 : en fin de charge et lors de tout soutirage.
- la figure 4 est une vue en perspective de la pièce de verrouillage des figures 1 à 3 ;
- la figure 5 est une vue, analogue à la figure 1, d'un second mode de réalisation ;
- les figures 6 à 8 sont de vues, analogues aux figures 1 à 3, d'un troisième mode de réalisation ; et
- la figure 9 est une vue en perspective de la pièce de verrouillage des figures 6 à 8.

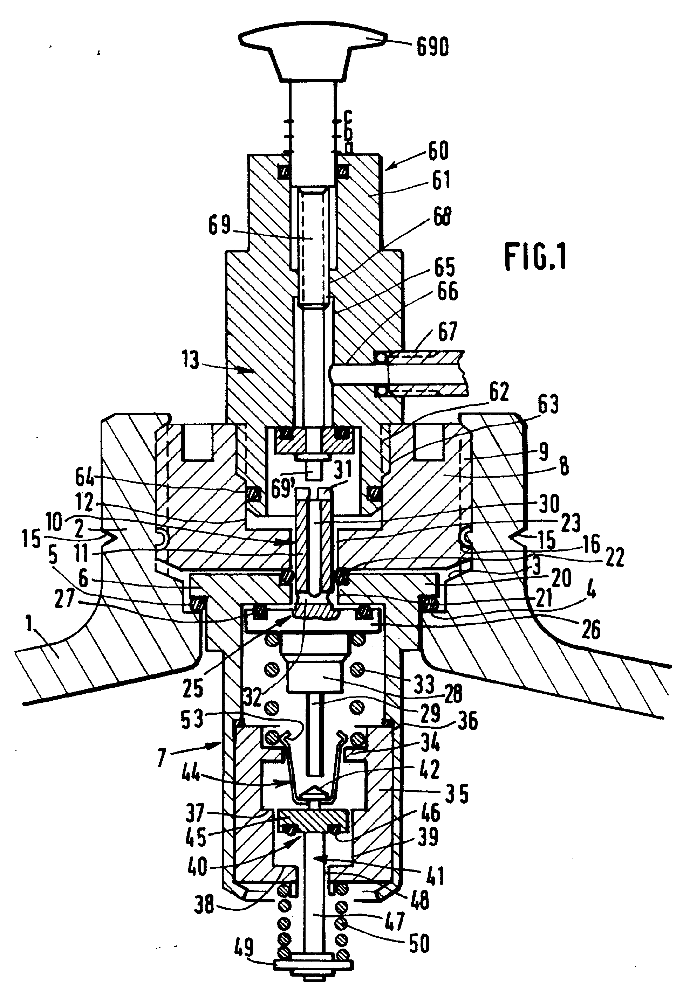

En se référant aux figures 1 à 3, un conteneur de fluide sous pression du type emballage perdu comprend un corps de bouteille 1 à col 2 présentant à l'intérieur deux épaulements annulaires successifs 3 et 4. L'épaulement le plus profond 4 sert à l'appui, étanche par l'intermédiaire d'un bord élargi 6 et d'un joint 5, d'un boîtier de valve tubulaire 7 qui est maintenu en place dans le col 2 par un bouchon 8, vissé en 9 dans le col 2, et présentant une ouverture centrale 10 pour le passage d'une tête de valve tubulaire 11 et un évidement 12 pour le montage d'un robinet 13. L'ensemble est rendu indémontable et étanchéifié en sertissant l'extrémité du col 2 sur le bouchon 8 et/ou en repoussant, par des coups de pointeau 15, la paroi du col 2 dans une gorge périphérique 16 du bouchon 8.

Le boîtier de valve 7 présente, au travers de sa paroi d'extrémité axiale 20, une ouverture 21 pour le passage de la tête de valve 11 avec interposition d'un joint d'étanchéité 22 maintenu en position dans la paroi 20 du boîtier 7. La tête de valve 11 forme une extension saillante à l'extérieur du boîtier à valve 7 d'une valve principale dite valve de remplissage-soutirage 25 formée d'un équipage mobile, comprenant, outre la tête de valve 11, un clapet principal de remplissage-soutirage 26 pourvu d'un joint 27 coopérant en appui de fermeture contre la paroi 20 autour de l'ouverture 21, un corps de clapet 28 et une queue 29. La tête de valve 11 présente un passage axial 30 débouchant à l'extérieur à une extrémité libre pourvue de tétons 31 et à l'intérieur par des conduits radiaux 32 situés juste au dessus du clapet 26. Un ressort de compression 33 est engagé autour du corps de valve 28 et prend appui entre le clapet 26 et un épaulement interne 34 dans le boîtier 7. Cet épaulement 34 est formé avantageusement par une pièce de fond 35 sertie dans une enveloppe 36 du boîtier de valve 7. La pièce de fond 35 présente en outre deux épaulements successifs 37 et 38 et une portée cylindrique 39 pour le guidage à jeu libre d'une valve auxiliaire 40, dite valve d'interdiction remplissage, formée d'un équipage mobile 41, présentant une tête de maintien 42 pour une pièce de retenue ou de verrouillage élastique 44 de l'équipage mobile 41, un clapet 45 à joint inférieur 46 et une queue 47 saillant au travers d'un passage 48 pour se terminer par une rondelle de retenue 49 d'un ressort de compression à faible tarage 50 prenant appui contre la face frontale externe de la pièce de fond 35.

La pièce de retenue élastique 44 est formée d'un corps annulaire 51 à partir duquel s'étendent trois ou quatre pattes en forme de lames 52 se terminant chacune par un doigt coudé 53.

Initialement, lors de la fabrication en usine, on engage l'ensemble des pattes 52 au travers de l'orifice délimité par l'épaulement 34 jusqu'à ce que les doigts coudés se verrouillent élastiquement au-dessus de l'épaulement 34, ce qui correspond à la position armée en ouverture verrouillée de clapet auxiliaire 45.

Le boîtier de valve 7 qui vient d'être décrit, une fois monté sur une bouteille 1 au moyen du bouchon 8, est équipé, au poste de remplissage, d'un robinet de remplissage 60 à corps 61 vissé en 62 dans un filetage interne 63 du bouchon 8 avec interposition d'un joint d'étanchéité 64. Dans un passage axial 65 du corps de robinet 61, qui communique vers l'extérieur par un passage latéral 66 à raccord 67, est monté à vissage en 68 une tige de robinet 69 à bouton de manoeuvre 690. La tige de robinet 69 présente une extension axiale suffisante pour venir en trois positions successives indiquées par les index a (position sortie maximale de la tige 69), b (enfoncement léger de la tige 69) et c (enfoncement maximal de la tige 69). Dans la position a, l'extrémité libre 69' de la tige 69 est à faible distance de l'extrémité de la tête 11 de l'équipage mobile 25 du clapet principal 26, et le clapet 26 est donc en appui étanche de fermeture, alors que le clapet auxiliaire 45 est maintenu en position d'ouverture par l'organe de verrouillage 44.

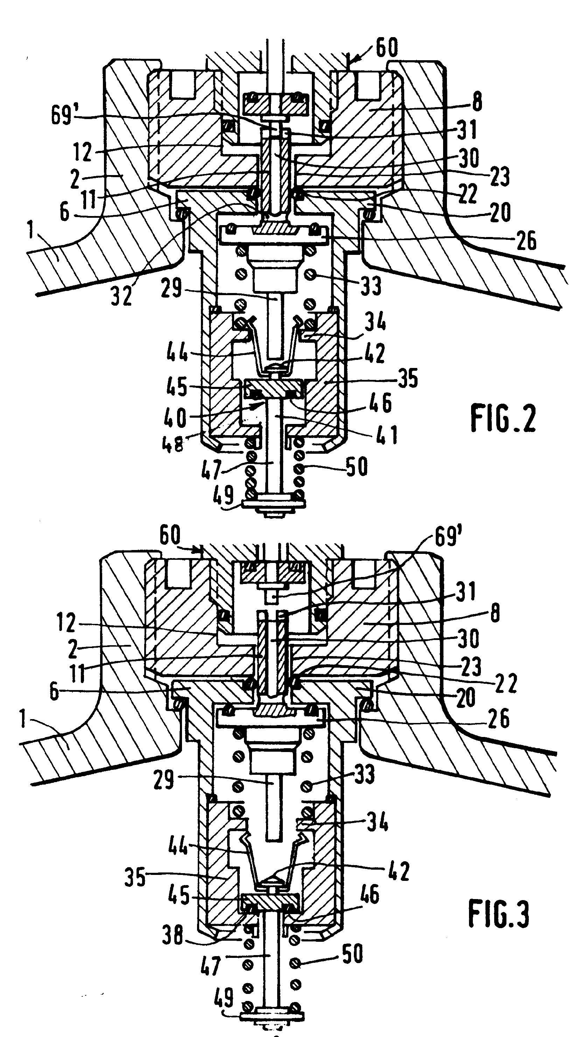

Une source de gaz comprimé est alors branchée sur le raccord 67 et la tige de robinet 40 est manoeuvrée jusqu'au repère d'enfoncement b, position dans laquelle l'équipage mobile 25 est légèrement déplacé de façon à dégager le clapet principal 26 de son siège 20, sans pour autant que la queue 29 vienne en butée contre la tête 42 de l'équipage mobile du clapet auxiliaire 45, qui reste donc en position verrouillée d'ouverture. Le gaz sous pression peut alors pénétrer dans la bouteille par les passages 30, 32 et 48 (voir figure 2).

En fin de remplissage, la tige de robinet 69 est manoeuvrée par le bouton 690 de façon à provoquer son enfoncement maximal (repère c), ce qui a pour effet de faire venir la queue 29 du clapet principal 26 en appui de poussée sur la tête 42 de la valve auxiliaire 40, jusqu'à provoquer le déverrouillage définitif et non réarmable du moyen de retenue 44 en forçant les doigts 53 hors d'engagement avec l'épaulement 34. Le clapet auxiliaire 45 est alors immédiatement déplacé vers sa position de fermeture (figure 3) sous l'action du ressort 50, car la même pression règne de part et d'autre de ce clapet 45. Le robinet 60 est ensuite refermé en faisant remonter la tige 69 (figure 3).

Après quoi, la source est déconnectée et le robinet 60 retiré par dévissage. L'emballage est prêt à être stocké et/ou livré à l'utilisateur.

Au poste d'utilisation, un robinet classique est mis en place qui cependant ne présente que deux positions - ouverture et fermeture. Toute poussée d'ouverture sur le clapet 26 provoque un soutirage gazeux et, du fait de la baisse de pression en aval du clapet auxiliaire 45, l'ouverture immédiate du clapet 45, libérant ainsi du gaz de la bouteille.

En fin de soutirage, le clapet auxiliaire 45 ne se soulève plus et reste donc en position de fermeture sur son siège 38 sous l'action du ressort de compression 50.

Dans cette configuration, toute tentative de re-remplissage par l'utilisateur est vouée à l'échec. Même en utilisant le robinet spécial 60 à trois positions du poste de remplissage, le clapet auxiliaire 45 demeure définitivement en position de fermeture sur son siège 38 et toute arrivée de gaz ne peut que renforcer cette position de fermeture. L'emballage est donc à coup sûr non réutilisable.

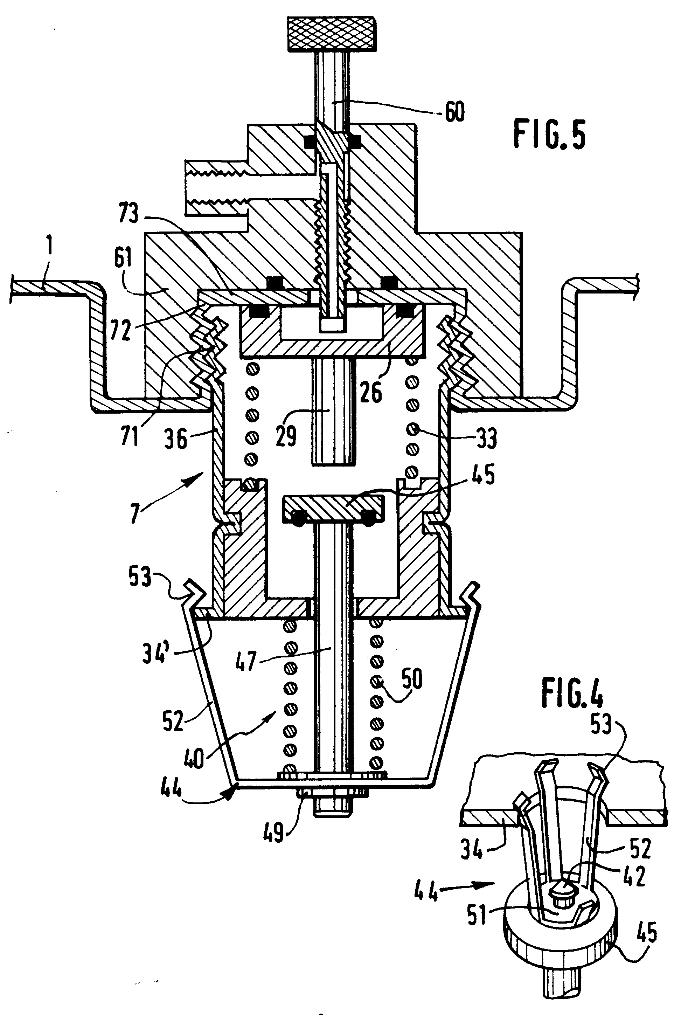

On a représenté sur la figure 5 une variante du mode de réalisation des figures 1 à 4.

Le boîtier de valve 7 est ici monté à simple visssage ou sertissage en 71 à l'intérieur d'un col embouti 72 d'un couvercle d'emballage 1, après quoi l'extrémité du col est rabattue en 73 pour emprisonner le boîtier de valve 7. Le robinet 60 de commande d'ouverture du clapet principal 26 et de déverrouillage du clapet auxiliaire 45 est mis en place par vissage du corps de robinet 61 sur l'extérieur du col 72. Le clapet auxiliaire 45 est ici verrouillé par un moyen de retenue 44 situé à l'extérieur du boîtier de valve 7 et solidarisé à l'équipage 40 de clapet auxiliaire en étant pincé entre la rondelle 49 et le ressort 50. Les doigts 53 prennent ici appui sur une collerette extérieure 34' à l'extrémité inférieure du boîtier 7. La queue 29 de l'équipage du clapet principal 26 est ici plus massive et prend appui directement sur le clapet auxiliaire 45.

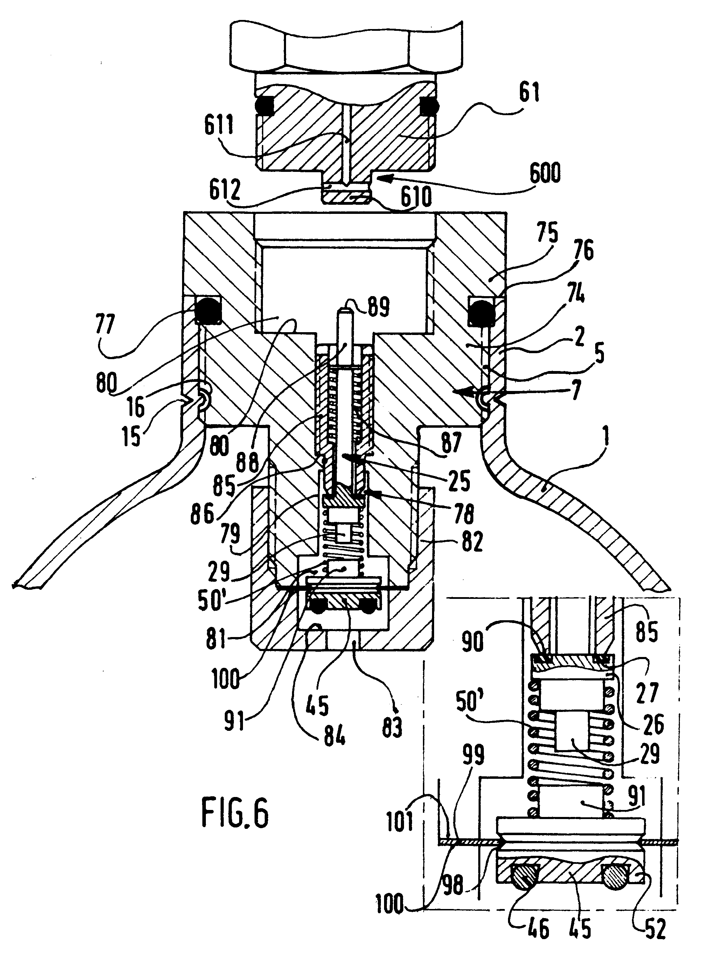

En se référant aux figures 6 à 8, une bouteille 1 à col 2 est équipée d'un boîtier de valve 7 présentant un corps 74 vissé à l'intérieur du col 2 jusqu'à appui serré d'un rebord supérieur 75 sur la tranche 76 du col de bouteille 2 avec interposition d'un joint d'étanchéité 77, le tout étant rendu indémontable par des coups de pointeau 15 sur le col en regard de la gorge 16.

Le corps 74 présente un passage axial central 78 avec une partie centrale 79 formant logement pour l'équipage de clapet principal 25, une partie supérieure de diamètre élargi 80 avec épaulement interne 80' de butée pour un robinet de remplissage-soutirage 600, et une partie inférieure élargie formant logement 81 pour le clapet auxiliaire 45, ce logement 81 étant fermé par un culot vissé 82 présentant un passage de traversée 83 côté inférieur, précédé d'un large épaulement interne 84.

La valve principale 25 présente un corps de valve 85 vissé dans une partie intermédiaire du passage central 78 jusqu'à butée sur un épaulement interne 86. Ce corps de valve 85 forme un passage axial avec un épaulement interne de butée pour un ressort de compression 87 s'appuyant d'autre part sur une collerette amont d'une tige de clapet 88 présentant une extension supérieure de manoeuvre 89 et une queue inférieure 29 prolongeant le clapet principal 26, lequel incorpore un joint annulaire 27 pour coopérer avec l'extrémité inférieure frontale formant siège 90 du corps de valve 85. La queue de clapet 29 se présente en regard du clapet auxiliaire 45 lui-même formé avec une extension 91 formant téton de montage pour un ressort de compression 50' à faible tarage interposé entre les clapets 26 et 45.

Le joint annulaire 46 du clapet auxiliaire 45 est agencé pour venir en appui étanche contre l'épaulement 84 formant siège autour du passage central 83 dans le fond du culot 82.

Le clapet auxiliaire 45 présente une rainure périphérique 98 de maintien provisoire du clapet auxiliaire 45 en position verrouillée écartée du siège 84 grâce à un disque annulaire flexible 99 comportant au moins deux, typiquement trois pattes s'étendant radialement vers l'intérieur 99a et 99b engagées dans la rainure 98, et dont la périphérie extérieure est coincée de façon étanche entre un épaulement interne 100 du culot 82 et le bord frontal inférieur 101 du corps de boîtier 7.

L'organe de remplissage-soutirage 600 présente, comme précedemment, un corps 61, adapté à être vissé dans l'évidement 80, avec une protubérance axiale inférieure 610 et un passage axial 611 débouchant extérieurement par des conduits radiaux 612.

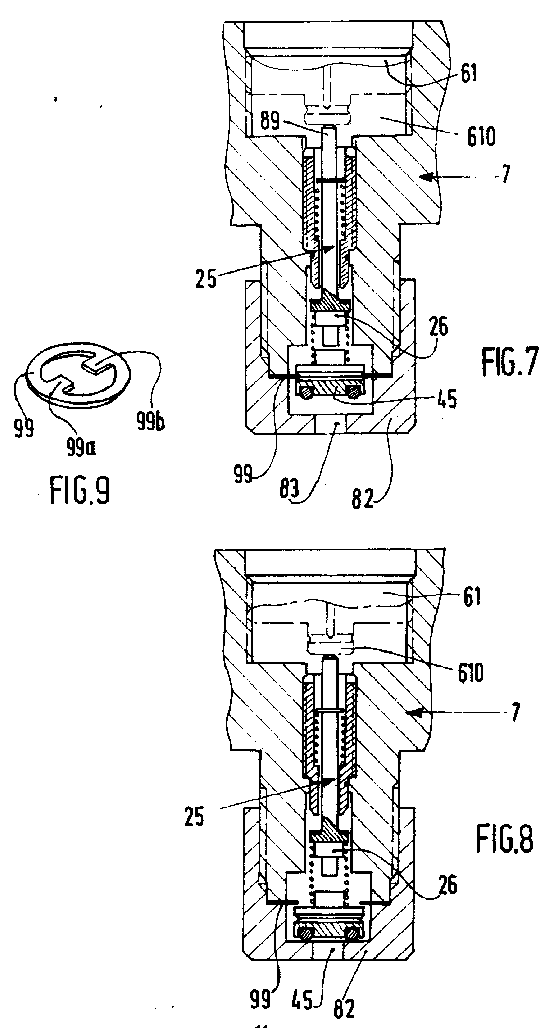

Avant un premier remplissage, le corps 61 est vissé jusqu'à une position intermédiaire (figure 7) où la protubérance 610 est venue en appui sur l'extension 89 du clapet principal repoussant vers le bas la tige de clapet principal 88 et dégageant le clapet principal 26 de son siège 90.

Dans cette position intermédiaire, la queue inférieure 29 du clapet principal 26 n'est pas encore en contact avec l'extension 91 du clapet auxiliaire 45 qui est maintenu verrouillé en position ouverte par le disque 99. La charge peut alors avoir lieu, les deux clapets principal 26 et auxiliaire 45 étant tous deux en position ouverte. Dès que la charge est terminée, on procède à un vissage plus poussé du corps 61 (figure 8), de sorte que la queue 29 vient en contact de poussée avec l'extension 91 du clapet auxiliaire 45. Au-delà d'une position axiale de déformation maximale, les pattes du disque de retenue 99 s'échappent de la rainure 98 et le clapet auxiliaire 45 est définitivement déverrouillé, venant, sous l'effet du ressort 50', en appui sur son siège 84 et n'autorisant plus le transit, au travers du passage 83, que dans le sens du soutirage du contenu de l'emballage 1.

## Revendications

1. Ensemble de valve pour conteneur (1) de fluide sous pression, du genre comprenant un boîtier de valve (7) renfermant un clapet principal (26) sollicité en fermeture par un premier ressort de rappel (33 ; 87) et susceptible de coopérer avec un moyen (690 ; 600) d'actionnement du clapet principal à l'encontre de l'action du premier ressort, caractérisé en ce qu'il comprend un clapet auxiliaire (45) disposé dans le boîtier (7), en série avec le clapet principal (26), sollicité en fermeture par un second ressort à faible tarage (50 ; 50') et maintenu initialement en position d'ouverture par un moyen de verrouillage (44 ; 99) armé initialement en position verrouillée et déplaçable vers une position de déverrouillage définitif par le clapet principal (26), lors d'une action d'ouverture accentuée exercée par le moyen d'actionnement (690 ; 600) sur le clapet principal au-delà de sa course d'ouverture normale.

2. Ensemble de valve selon la revendication 1, caractérisé en ce que les clapets principal (26) et auxiliaire (45) sont disposés coaxialement avec le moyen de verrouillage qui est constitué d'une pièce (44 ; 99) à pattes élastiques (52 ; 99a ; 99b) interposée en engagement de coopération élastique entre le clapet auxiliaire (45) et le boîtier (7), le clapet principal (26) présentant une extension (29) dirigée vers le clapet auxiliaire, adaptée à venir coopérer en poussée axiale avec le clapet auxiliaire.

3. Ensemble de valve selon la revendication 2, caractérisé en ce que le moyen de verrouillage (44) est solidaire du clapet auxiliaire (45), les pattes élastiques (52) ayant des extrémités libres (53) coopérant avec un bord d'ancrage (34 ; 34') solidaire du boîtier (7).

4. Ensemble de valve selon la revendication 3, caractérisé en ce que le moyen de verrouillage (44) est disposé dans le boîtier de valve (7), entre le clapet principal (25) et le clapet auxiliaire (45), le bord d'ancrage étant formé par une extension radiale interne (34) du boîtier.

5. Ensemble de valve selon la revendication 3, caractérisé en ce que le moyen de verrouillage (91) est disposé à l'extérieur du boîtier de valve (80), le bord d'ancrage étant formé par une extension radiale externe (34') du boîtier.

6. Ensemble de valve selon la revendication 2, caractérisé en ce que le moyen de verrouillage (99) est solidaire du boîtier de valve (7), les pattes élastiques (99a ; 99b) ayant des extrémités libres coopérant avec le clapet auxiliaire (45).

7. Ensemble de valve selon la revendication 6, caractérisé en ce que le moyen de verrouillage (99) est constitué d'une pièce annulaire comportant au moins deux pattes (99a ; 99b) s'étendant radialement vers l'intérieur et dont les extrémités sont reçues dans une rainure périphérique (98) du clapet auxiliaire (45).

8. Ensemble de valve selon la revendication 6 ou la revendication 7, caractérisé en ce que le second ressort (50') est disposé entre les clapets principal (26) et auxiliaire (45).

9. Ensemble de valve selon l'une des revendications précédentes, caractérisé en ce que le boîtier de valve (7) est constitué d'un corps (74), solidarisé au conteneur (1) et comportant un passage axial étagé (78) formant logement pour le clapet principal (26), et d'un culot (82) formant logement et siège (84) pour le clapet auxiliaire (45).

10. Emballage de fluide sous pression, caractérisé en ce qu'il est équipé d'un ensemble de valve selon l'une des revendications 1 à 9.

## Patentansprüche

1. Ventilanordnung für einen unter Druck stehenden Fluidbehälter (1) mit einem Ventilgehäuse (7), das ein Hauptventilorgan (26) umschließt, das durch eine erste Rückstellfeder (33; 87) in Schließstellung belastet ist und gegen die Wirkung der ersten Feder mit einer Betätigungseinrichtung (690; 600) des Hauptventilorgans zusammenwirken kann, gekennzeichnet durch ein Hilfsventilorgan (45), das in Serie zu dem Hauptventilorgan (26) im Gehäuse (7) angeordnet ist, durch eine schwach vorgespannte zweite Feder (50; 50') in Schließstellung belastet ist und anfangs von einer Einrasteinrichtung (44; 99) in geöffneter Stellung gehalten ist, welche Einrasteinrichtung anfangs in einer Einraststellung gesichert ist und von dem Hauptventilorgan (26) in eine endgültige Entriegelungsstellung verschiebbar ist, sofern von der Betätigungseinrichtung (690; 600) eine verstärkte Öffnungsbewegung auf das Hauptventilorgan über dessen normalen Öffnungsweg hinaus übertragen wird.

2. Ventilanordnung nach Anspruch 1, dadurch gekennzeichnet, daß das Haupt- (26) und das Hilfsventilorgan (45) koaxial zur Einrasteinrichtung angeordnet sind, welche aus einem Teil (44; 99) mit elastischen Klammern (52; 99a; 99b) gebildet ist, das zwischen das Hilfsventilorgan (45) und das Gehäuse (7) elastisch eingreifend eingefügt ist, wobei das Hauptventilorgan (26) eine auf das Hilfsventilorgan gerichtete Verlängerung (29) aufweist, die zum Zusammenwirken mit dem Hilfsventilorgan unter axialem Druck ausgebildet ist.

3. Ventilanordnung nach Anspruch 2, dadurch gekennzeichnet, daß die Einrasteinrichtung (44) mit dem Hilfsventilorgan (45) fest verbunden ist, und daß die elastischen Klammern (52) freie Enden (53) besitzen, die mit einer mit dem Gehäuse (7) einstückigen Verankerungsschulter (34; 34') zusammenwirken.

4. Ventilanordnung nach Anspruch 3, dadurch gekennzeichnet, daß die Einrasteinrichtung (44) im Ventilgehäuse (7) zwischen dem Hauptventilorgan (25) und dem Hilfsventilorgan (45) angebracht ist, wobei die Verankerungsschulter von einem radialen Einsprung (34) des Gehäuses gebildet ist.

5. Ventilanordnung nach Anspruch 3, dadurch gekennzeichnet, daß die Einrasteinrichtung (91) außerhalb des Ventilgehäuses (80) angeordnet ist, wobei die Verankerungsschulter von einem äußeren radialen Bund (34') des Gehäuses gebildet ist.

6. Ventilanordnung nach Anspruch 2, dadurch gekennzeichnet, daß die Einrasteinrichtung (99) mit dem Ventilgehäuse (7) fest verbunden ist, wobei die elastischen Klammern (99a; 99b) freie Enden besitzen, die mit dem Hilfsventilorgan (45) zusammenwirken.

7. Ventilanordnung nach Anspruch 6, dadurch gekennzeichnet, daß die Einrasteinrichtung (99) aus einem ringförmigen Teil mit mindestens zwei Klammern (99a; 99b) gebildet ist, die sich radial nach innen erstrecken, und deren Enden in einer Umfangsnut (98) des Hilfsventilorgans (45) aufgenommen sind.

8. Ventilanordnung nach Anspruch 6 oder 7, dadurch gekennzeichnet, daß die zweite Feder (50') zwischen dem Haupt- (26) und dem Hilfsventilorgan (45) angeordnet ist.

9. Ventilanordnung nach einem der vorhergehenden Ansprüche, dadurch gekennzeichnet, daß das Ventilgehäuse (7) aus einem mit dem Behälter (1) fest verbundenen Körper (74) besteht und einen eine Aufnahme für das Hauptventilorgan (26) bildenden gestuften Axialdurchlaß (78) sowie eine Kappe (82) umfaßt, die die Aufnahme und den Sitz (84) für das Hilfsventilorgan (45) bildet.

10. Verpackung für ein unter Druck stehendes Fluid, dadurch gekennzeichnet, daß sie mit einer Ventilanordnung nach einem der Ansprüche 1 bis 9 ausgestattet ist.

## Claims

1. Valve assembly for a pressurized fluid container (1), of the type containing a valve housing (7) comprising a main valve (26) stressed for closure by a first return spring (33; 87) and capable of cooperating with a means (690; 600) for actuating the main valve against the action of the first spring, the valve assembly being characterised in that it comprises an auxiliary valve (45) arranged within the housing (7) in series with the main valve (26), which auxiliary valve is stressed for closure by a second spring (50; 50') of low calibration and is held initially in the opening position by a locking means (44; 99) armed initially in the locked position and displaceable towards a definitive unlocking position by the main valve (26), when a pronounced opening action is exerted on the main valve beyond its normal opening movement, by the actuation means (690; 600).

2. Valve assembly according to claim 1, characterised in that the main valve (26) and the auxiliary valve (45) are arranged coaxially with the locking means, which is formed by a piece (44; 99) having elastic tabs (52; 99a; 99b) and interposed so that it is engaged for elastic cooperation between the auxiliary valve (45) and the housing (7), the main valve (26) having an extension (29) which is directed towards the auxiliary valve and its suitable for acting to cooperate for axial thrust with the auxiliary valve.

3. Valve assembly according to claim 2, characterised in that the locking means (44) is solidly connected to the auxiliary valve (45), the elastic tabs (52) having free ends (53) which cooperate with an anchoring edge (34, 34') solidly connected to the housing (7).

4. Valve assembly according to claim 3, characterised in that the locking means (44) is arranged in the valve housing (7) between the main valve (25) and the auxiliary valve (45), the anchoring edge being formed by an internal radial extension (34) of the housing.

5. Valve assembly according to claim 3, characterised in that the locking means (91) is arranged outside the valve housing (80), the anchoring edge being formed by an outer radial extension (34') of the housing.

6. Valve assembly according to claim 2, characterised in that the locking means (99) is solidly connected to the valve housing (7), the elastic tabs (99a; 99b) having free ends which cooperate with the auxiliary valve (45).

7. Valve assembly according to claim 6, characterised in that the locking means (99) is formed by an annular piece comprising at least two tabs (99a; 99b) extending radially inwards, the ends of which are received in a peripheral groove (98) of the auxiliary valve (45).

8. Valve assembly according to claim 6 or claim 7, characterised in that the second spring (50') is arranged between the main valve (26) and the auxiliary valve (45).

9. Valve assembly according to one of the preceding claims, characterised in that the valve housing (7) is formed by a body (74) which is solidly connected to the container (1) and comprises a stepped axial passage (78) forming a receiver for the main valve (26), and by a base (82) forming a receiver and seating (84) for the auxiliary valve (45).

10. Pressurised fluid packaging, characterised in that it is provided with a valve assembly according to one of claims 1 to 9.
